(19) Europäisches Patentamt
European Patent Office
Office européen des brevets

(11) **EP 2 874 117 A1**

(12) **EUROPEAN PATENT APPLICATION**

(43) Date of publication:
**20.05.2015 Bulletin 2015/21**

(51) Int Cl.:
***G06T 7/00*** *(2006.01)*

(21) Application number: **13193165.1**

(22) Date of filing: **15.11.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Axis AB**
**223 69 Lund (SE)**

(72) Inventors:
• **Hjelmström, Jonas**
**245 92 Staffanstorp (SE)**

• **Lundberg, Stefan**
**224 56 Lund (SE)**
• **Träff, Gustav**
**227 36 Lund (SE)**

(74) Representative: **Johansson, Magnus**
**Awapatent AB**
**Box 1066**
**251 10 Helsingborg (SE)**

(54) **Method and apparatus for determining position related properties of a motion video camera**

(57) The present invention relates to a system and a method for determining properties relating to the position of a camera at a site. The method comprises moving a position target within a scene captured by the camera, said position target including a visual identifier and a position determining device, recording position data of the position determining device, identifying the visual identifier in image frames captured by the camera, relating image frames in which the visual identifier has been identified with corresponding recorded positions of the position determining device, and calculating a position of the camera based on related images and positions.

FIG 5

**Description**

Technical field of the invention

The present invention relates to methods, systems, and apparatuses for determining properties relating to how a motion video surveillance camera is positioned at a site to be surveyed.

Background of the invention

Image capturing systems are commonly used in businesses and industries for monitoring, surveillance, or for providing visual information to a user. The user may be an operator of the system or just someone having access to the imagery from the cameras. These systems generally include motion video cameras capturing moving imagery that are to be positioned for effective coverage for the particular application. Information relating to the position of camera and the image capturing direction of the camera is important for some applications, especially for automated systems in which a plurality of cameras are to operate interdependently. In such systems it is important that the cameras are correctly positioned or at least that the system knows the position of the cameras. This may also be important in some surveillance schemes or monitoring applications. For example, there are applications in which a map or a plan view of a surveyed area is arranged to show where the cameras are positioned and to show the monitoring area of each camera.

The common way to register the data relating to the position of the camera and the direction in which the camera is arranged to capture imagery is to manually measure and enter the data. This method is labour intensive and prone to errors.

Summary of the invention

One object of the present invention is to provide an improved method for determining position related properties of a motion video camera.

The object is achieved by means of a method according to claim 1 and by means of a position determining device according to claim 7. Further embodiments of the invention are presented in the dependent claims.

In particular, according to one aspect of the invention, a method for determining properties relating to the position of a camera at a site comprises moving a position target within a scene captured by the camera, said position target including a visual identifier and a position determining device, recording position data of the position determining device, identifying the visual identifier in image frames captured by the camera, relating image frames in which the visual identifier has been identified with corresponding recorded positions of the position determining device, and calculating a position of the camera based on related images and positions. One advantage of using the process above is that the determination of the position of a camera may be easily achieved. Another, advantage is that the process facilitate gathering of position information of cameras in systems including many cameras.

According to one embodiment the method further comprises calculating a viewing direction of the camera based on related images and positions. The advantage of this feature is that further information relating to a camera is possible to calculate without further effort.

According to another embodiment the act of relating image frames in which the visual identifier has been detected with corresponding recorded positions of the position determining device is performed by comparing time stamps of the image frames and time stamps of the recorded positions and then determining that an image is related to a recorded position when the time stamps of the image frame and the recorded position corresponds.

In one embodiment the visual identifier is a predetermined pattern.

In another embodiment the predetermined pattern is a pattern uniquely identifying the position target.

In yet another embodiment the position determining device is arranged in a housing and the visual identifier is arranged on said housing. The advantage of this embodiment is that it facilitates the operation of the system by providing a simple device to carry.

According to another embodiment the moving of the position target is performed by a manually controlled carrier.

According to another aspect of the invention a position target comprises a visual identifier being a predetermined pattern and a position determining device.

In one embodiment of this aspect of the invention the visual identifier is of such size that it may be visually identified at a distance from the camera of more than two meters.

In another embodiment the visual identifier is arranged to enable unique identification of the position determining device.

In yet another embodiment the visual identifier is formed for enabling calculation of optical distortion in an optical system of a camera.

According to another embodiment the position target further comprises a wireless network interface.

A further scope of applicability of the present invention will become apparent from the detailed description given below. However, it should be understood that the detailed description and specific examples, while indicating embodiments of the invention, are given by way of illustration only, since various changes and modifications within the scope of the invention will become apparent to those skilled in the art from this detailed description. Hence, it is to be understood that this invention is not limited to the particular component parts of the device described or steps of the methods described as such device and method may vary. It is also to be understood that the terminology used herein is for purpose of describing particular embodiments only, and is not intended to be limiting. It must be noted that, as used in the specification and the appended claim, the articles "a," "an," "the," and "said" are intended to mean that there are one or more of the elements unless the context clearly dictates otherwise. Thus, for example, reference to "a sensor" or "the sensor" may include several sensors, and the like. Furthermore, the word "comprising" does not exclude other elements or steps.

Brief description of the drawings

Other features and advantages of the present invention will become apparent from the following detailed description of a presently preferred embodiment, with reference to the accompanying drawings, in which

Fig 1 is a schematic block diagram of a system in which the invention is used according to one embodiment of the invention,
Fig 2 is a schematic block diagram of a position target according to one embodiment of the invention,
Fig 3 is schematic view over a site monitored by means of two cameras and an example route that the position target has taken,
Fig 4a shows an image frame captured by camera 10a in Fig 3,
Fig 4b shows another image frame captured by camera 10a in Fig 3,
Fig 5 is a flowchart over a general process for determining the position and the viewing direction of a camera according to one embodiment of the invention,
Fig 6a shows an example view of monitored area, a camera, and positions for where image frames and positions are registered for further analysis,
Fig 6b is a schematic view of a camera and an object that is registered by an image sensor of the camera,
Fig 7a shows an example image frame as captured by a camera for determining the direction of the camera according to one embodiment,
Fig 7b shows a schematic view of a camera and the features used to determine the direction of the optical axis according the embodiment referred to in relation to Fig 7a,
Fig 8a-c shows various patterns for visual identifiers used in embodiments of the invention, and
Fig 9 is a flowchart over a more detailed process for determining the position and the viewing direction of a camera according to one embodiment of the invention.

Further, in the figures like reference characters designate like or corresponding parts throughout the several figures.

Detailed description of embodiments

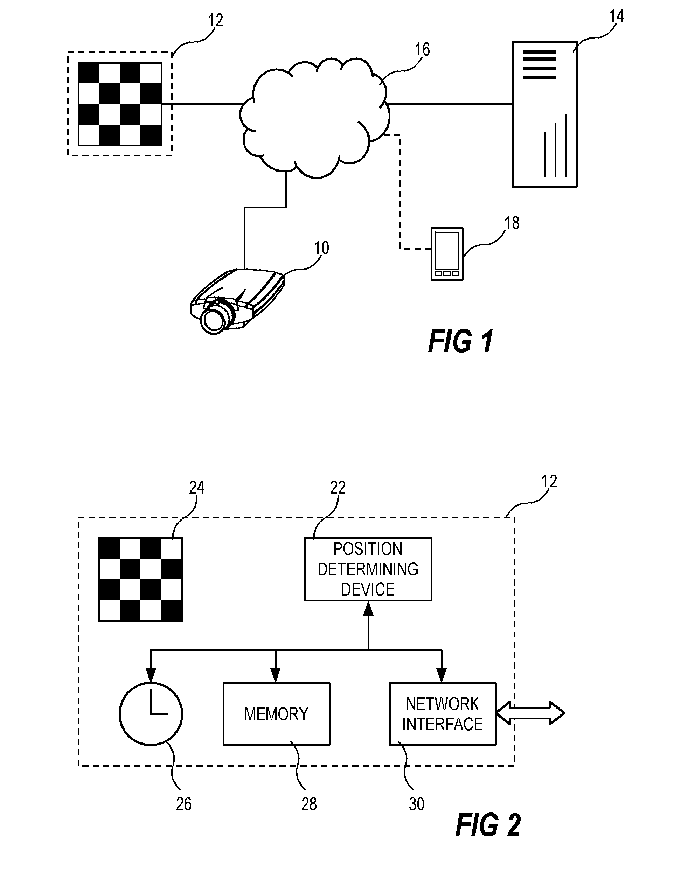

One embodiment of a system relating to the invention is showed in Fig 1. The system in Fig 1 includes a motion video camera 10 for which the positional properties are to be determined, a position target 12 arranged to be mobile, and a server 14 arranged to process information from the motion video camera 10 and the position target 12 in order to generate a motion video camera property specification. This processing described as being performed by the server 14 may be distributed to respective camera that are positioned or it may be performed by a handheld client 18, which may be carried by a person. The motion video camera 10, the position target 12, and the server 14 are connected via a network 16. The system may be implemented without a network. However, is such an embodiment data registered by the motion video camera 10 and the position target 12 have to be downloaded to the server by other means, e.g. some kind of removable storage means such as a disc (CD, DVD, etc.), USD-sticks, hard disk drive, memory cards (SD, CF, MS, etc.), or any other type of removable storage means.
The network 16 may be any type of network that allows electronic devices to exchange data. The network may be wired, wireless or any combination thereof. It may be implemented by means of any known network protocol allowing the exchange of data between the electronic devices of the system, e.g. Ethernet (IEEE 802), Internet Protocol (IP) combined with TCP, UDP, or FTP, Synchronous optical networking (SONET), Synchronous Digital Hierarchy (SDH), Asynchronous Transfer Mode (ATM), etc. The system may be implemented using any size network, e.g. a Local Area Network (LAN) or a Wide Area Network (WAN).

3

The motion video camera 10 is any type of camera enabled to capture motion video and to communicate over a network 16.

One embodiment of the position target 12 is shown in Fig 2. This embodiment includes a positioning determining device 22, a visual identifier 24, a timing device 26, a memory 28, and a network interface 30.

The positioning determining device 22 may be a GPS or a D-GPS. Alternatively the positioning determining device may implement a triangulation method for triangulating signal transmitted over the air from the device, e.g., the Wi-Fi signal. An implementation including the use of laser based positioning instruments may also be feasible.

The visual identifier 26 may be a visually easily identifiable pattern arranged on the outside of a housing carrying the position determining device 22. The pattern may be a checkerboard pattern, a QR code, a barcode, or any other pattern easily visually distinguishable from the environment that it will be used in. The housing may be any type of arrangement that may carry the visual identifier 26 in a manner that makes it is visible from the surroundings and that may carry the positioning determining device. For example, the housing may be a bag, a back pack, a hat, a vest, a jacket, a box, a radio controlled vehicle, an autonomous robot, etc.

The timing device 26 may be a clock of some type. It may not necessary be a separate device, but may be the time signal used in a GPS device. However, it may be an integrated clock in the position determining device 22, a clock being separate from the position determining device 22. In one embodiment the timing device 26 is synchronised with a timing device generating time signals used for time stamping images from the motion video camera 10. The time signal generated by the timing device 26 is used for setting a time stamp on each position recording made by the position determining device 22.

The memory 28 may be an internal memory of the positioning determining device 22, e.g. the internal memory of a GPS device. However, it may be an external memory device such as a USB-thumb drive, a memory card (Secure Digital card, Compact Flash card, Memory Stick, etc.), a hard disk drive, etc. The memory 28 may be arranged to store time stamped positions before they are sent to the server 14 via the network 16 or transported to the server 14 in any other fashion.

The network interface 30 may be any standard network interface enabling communication over the network 16.

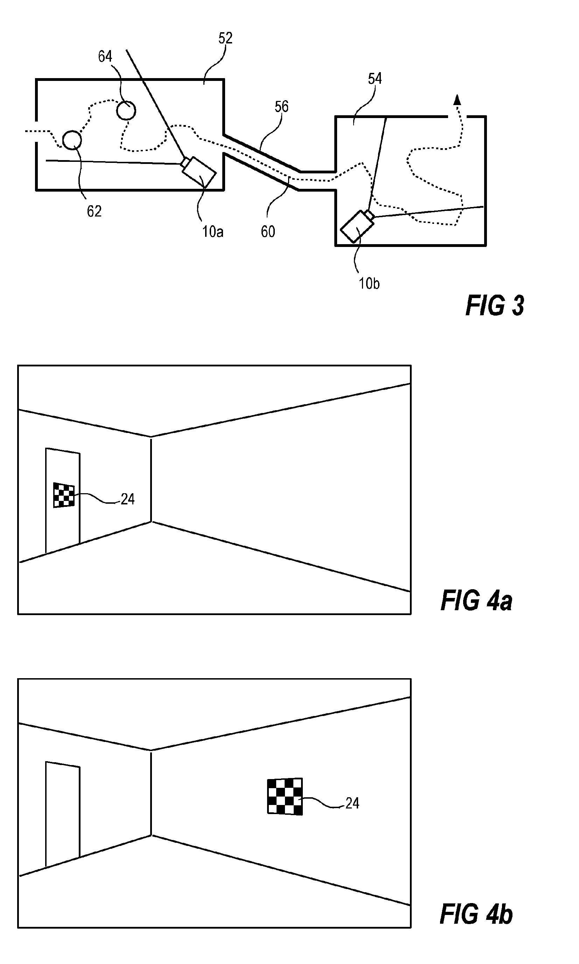

Now, in order to facilitate the understanding of the present invention the use of one embodiment of the invention will be described. In Fig 3 a plan view of two rooms 52, 54 connected by a short corridor 56 is showed. The two rooms 52, 54, are monitored by the cameras 10a and 10b. Before the process for determining position properties of the cameras is started the cameras 10a and 10b have to be up and running to capture images from the respective scenes. If they are not already up and running, the cameras 10 and 10b have to be started to capture images from the respective scenes. In one embodiment the motion video cameras 10a, 10b are set in a setup mode for the positioning process. The setup mode may be initiated by the starting of the camera, by a command sent to the camera or broadcasted to a plurality of cameras, or by the camera 10a, 10b recognising the visual identifier 26. Then the position target 12 is carried through the monitored areas 52, 54. When the position target 12 is passing by the cameras 10a, 10b, it is captured on motion video. The dashed line 60 represents the path that the position target 12 is carried in this example. The image captured by the camera 10a when the position target 12 is at position 62 is shown in Fig 4a and the image captured by the camera 10a when the position target is at position 64 is shown in Fig 4b. The position of the position target 12 is frequently recorded by the position determining device 22 of the position target 12 and sent to the server 14. The frequency at which the position is recorded is predetermined and may be of any value. The frequency may for instance be the same as the frame rate of the motion video, e.g. 60fps, 30fps, 24 fps, etc., or it may be at the frequency of one position recording every couple of seconds. Moreover, the motion video data captured by the cameras 10a, 10b, is continuously sent to the server. At the server 14 the position recordings and motion video frames are matched based on time stamps in the position recordings and time information in the motion video.

The physical position and the image data of matched position recordings and motion video frames are referred to as a pair and a plurality of these pairs of data are then used in calculating the position and viewing direction of the camera. More detailed descriptions of embodiments of such calculations will be presented below.

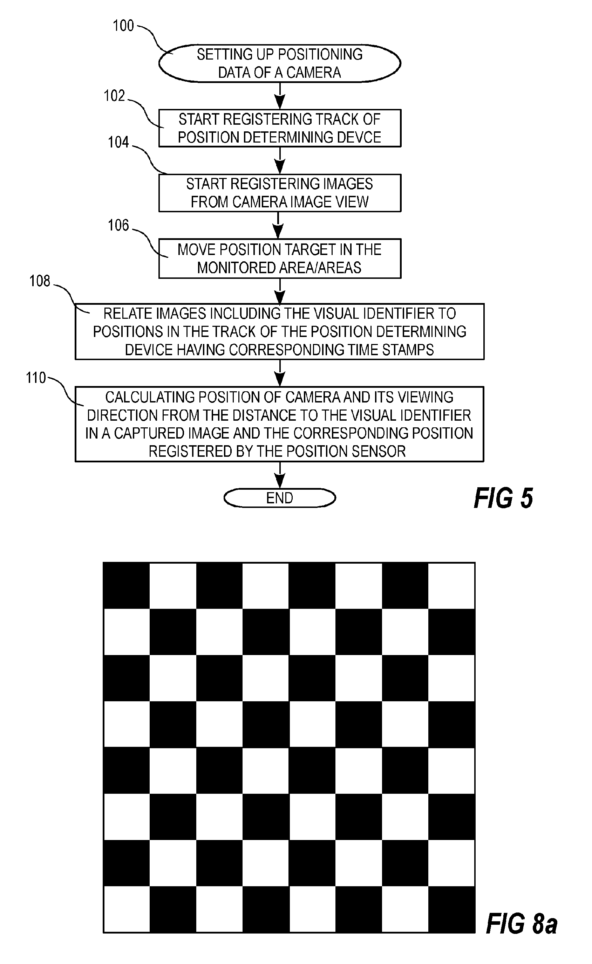

In Fig 5 a general process for determining properties relating to positioning of a motion video camera 10, according to one embodiment of the invention, is showed, 100. Initially the process start registering a track, i.e. a position at different points in time, of the position target 12, step 102, and start registering images, which makes up a motion video, from at least one camera view, step 104. Each image of the motion video is provided with information of the time of its registration and each position registered in the track is registered together with information of the time of the registration of the position in order to enable matching of images to corresponding positions of the position target 12. Accordingly, as previously described the clocks of the camera and the position target 12 must be synchronised in order to connect positions to the relevant image frame. Then the position target 12 is moved through the scene captured by the camera 10, step 106, and the images from the camera 10 that includes the visual identifier 24 is matched to positions from the position determining device 22 of the position target 12 based on the time indications registered with each position and with each image of the motion video, step 108. Then the position of the camera 10 is calculated based on a plurality of registered positions and corresponding captured image frames, step 110. Based on a captured image frame and at least one feature of the visual identifier identified in the video frame the distance to the position target 12 is determined and then the position of the position target 12 and the distance between the camera 10 and the position determining device 12 is used in calculating the position of the camera 10. One feature of the visual identifier 24 that may be identified in the captured video frame in order to calculate the distance between the camera and the position target 12 is the height of the visual identifier 24. Some other easily identified and measurable feature of the visual identifier 24 may be used instead of the height.

According to one particular embodiment, data relating to the position of the position target and data registered at the motion video camera 10 for use in calculating the position and direction of the camera is sent to a server performing the calculations. However, as previously mentioned, according to another embodiment the data relating to the position is sent to the camera 10 that captured images of the position target. In this latter case the camera is calculating the position and direction of itself from the data captured by the motion video camera 10 itself and data received from the position target 12. The camera 10 may send the resulting position and direction information to a server 14 for use in various processes. According to yet another embodiment the data relating to the position of the position target 12 and data registered at the camera 10 for use in calculating the position and direction of the camera 10 is sent to a client 18 performing the calculations. The client 18 may be a handheld terminal, e.g. a mobile phone, a smart phone, a tablet computer, a notebook computer, a personal digital assistant, etc., or a general computer.

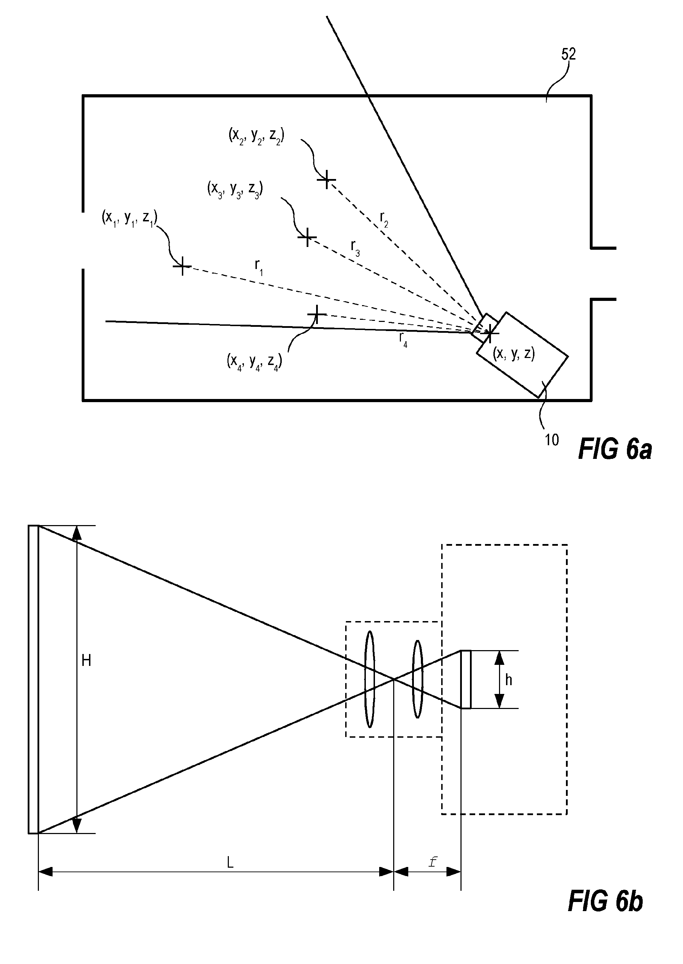

In one embodiment the calculation of the position and direction of the camera 10 is based on a plurality of positions $(x_i, y_i, z_i)$, provided by the position determining device 22 included in the position target 12, and distance values $r_i$ representing the distance from the camera 10 to the position determining device 22 at each position $(x_i, y_i, z_i)$, see Fig 6a and 6b. The distance value $r_i$ may be calculated using known properties of the visual identifier 24, properties of the visual identifier 24 as registered by an image sensor of the motion video camera 10, and optical properties of the motion video camera 10. For example, the distance value $r_i$ may be calculated using the following equation:

$$L = f\frac{H}{h} \qquad\qquad\qquad \text{eq. 1}$$

This equation presents an approximation which present acceptable and better than acceptable results for L when L is a large value in relation to $f$. In equation 1 above L represents the unknown distance value $r_i$, which later is to be used in order to determine the position of the motion video camera 10, $f$ is the focal length of the lens of the motion video camera 10, H is the physical height of the visual identifier 24 in reality, and h is the height of the visual identifier 24 captured by the image sensor. The variables H and h representing the height of the visual identifier 24 may be substituted to measure the width of the visual identifier 24 or any other measurable length property of the visual identifier 24. The length measurement of H and h should represent values representing the same length units.

The process of calculating the distance $r_i$ above and then the position of the motion video camera 10 may be arranged to use captured image frames in which there is a small difference between the heights of two of the sides of the visual identifier, i.e. the plane of the visual identifier is substantially perpendicular to the optical axis of the motion video camera.

The distance $r_i$ to the position target 12 from the motion video camera 10 is thus determined based on this calculated distance $r_i$ to the visual identifier 24. In order to calculate the position (x, y, z) of the motion video camera 10 the system may be arranged to make a trilateration calculation based on at least three positions of the position target 12. By means of the trilateration calculation the intersection of three spheres each having its centre at positions $(x_i, y_i, z_i)$, and radius $r_i$, i=1, 2, 3, is determined. However, in some trilateration methods additional positions are added to the calculation in order to increase the precision of the result of the calculation. In one embodiment the equations presented below may be used in order to calculate the position (x, y, z) of the camera.

In order to simplify the equations, the coordinate system used in the equations is selected so that the centres of the spheres are on the z=0 plane, the centre of one of the spheres is in the origin of the coordinate system and the centre of one of the other spheres is on the x-axis. The solutions to the equations may be transformed back to the original coordinate system in order to properly present the position of the motion video camera 10 in relation to other cameras or references in the system. Based on these prerequisites the three spheres may be described as:

$$r_1^2 = x^2 + y^2 + z^2 \qquad\qquad\qquad \text{eq. 2}$$

$$r_2^2 = (x - d)^2 + y^2 + z^2 \qquad \text{eq. 3}$$

$$r_3^2 = (x - i)^2 + (y - j)^2 + z^2 \qquad \text{eq. 4}$$

Wherein, the variables $r_1$, $r_2$, $r_3$, are the distances from the centre of each of the spheres to the intersection of the spheres, the intersection of the spheres corresponding to the position of the camera 10. The variables x, y, z, defines the position of the intersection and, thus, the position of the camera 10. Moreover, the coordinate system used for the equation is selected as mentioned above so that the coordinates for each of the spheres is $(x_1, y_1, z_1)$ to (0, 0, 0), $(x_2, y_2, z_2)$ to (d, 0, 0), and $(x_3, y_3, z_3)$ to (i, j, 0). From these equations the position of the intersection of the spheres, i.e. the position of the camera 10, may be derived, resulting in the following equations:

$$x = \frac{r_1^2 - r_2^2 + d^2}{2d} \qquad \text{eq. 5}$$

$$y = \frac{r_1^2 - r_3^2 + i^2 + j^2}{2j} - \frac{i}{j}x \qquad \text{eq. 6}$$

$$z = \pm\sqrt{r_1^2 - x^2 - y^2} \qquad \text{eq. 7}$$

The coordinates (x, y, z) of the camera 10 are then transformed back to the original coordinate system, various methods for such transformations of coordinate systems is well known to the skilled person.

Other more advanced trilateration methods may be implemented. Some examples of such methods are presented the article "Efficient Solution and Performance Analysis of 3-D Position Estimation by Trilateration", by Dimitris E. Manolakis, published in IEEE trans. on Aerospace & Electronic Systems, Vol. 32, No. 4, Oct. 1996, pages 1239-1248.

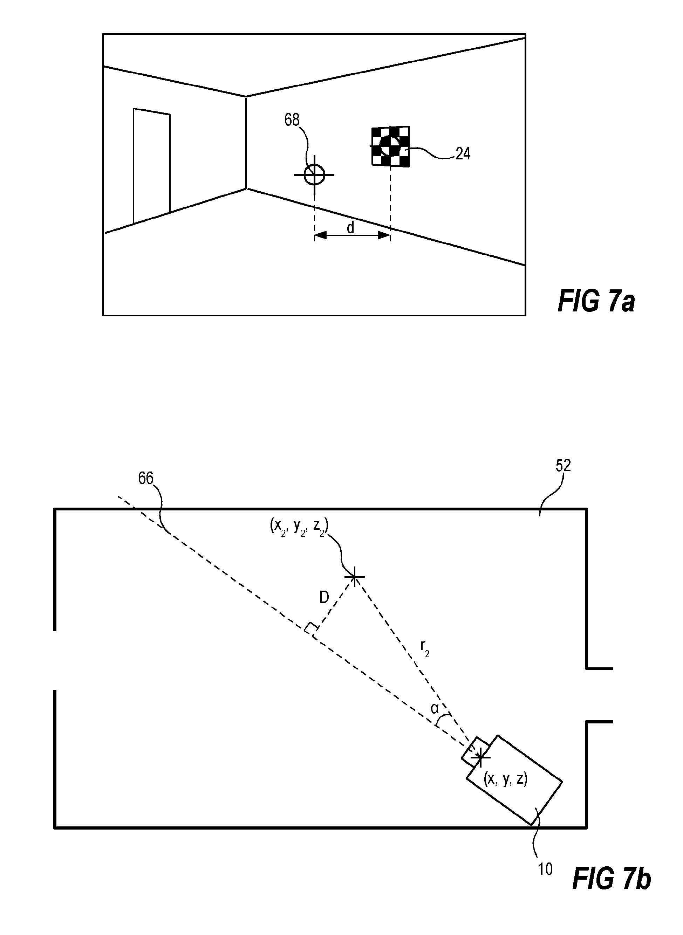

The direction of the camera may be calculated in many different ways. One way of doing it is described below with reference to Figs 7a-b. The objective is to determine the direction of the optical axis 66 of the camera 10. In the figures Fig 7a shows the scene as captured by the image sensor wherein the optical axis 66 coincides with the centre of the captured image 68 and the distance d between the optical axis 66 and the visual identifier 24 may be measured. This distance d is measured on the sensor and therefore the equation eq.1 used previously for determining the distance to the visual identifier 24 may be used in order to determine the distance D between the optical axis 66 and the visual identifier in the "real world". Substituting H and h with D and d, respectively, and L for $r_2$ and then rearranging the equation results in the equation below:

$$D = \frac{r_2}{f} d \qquad \text{eq. 8}$$

The distance $r_2$ is the distance calculated in connection with determining the position of camera using the same image frame. Then the angle $\alpha$ between the direction to the visual identifier 24 and the optical axis is derived using basic trigonometry, e.g.

$$\alpha = \sin^{-1}\left(\frac{D}{r_2}\right) \qquad \text{eq. 9}$$

In order to increase the accuracy of the direction calculation a plurality of image frames including the additional image frames for which the distance to the position target 12 and the visual identifier 24 has been determined may be used for calculating additional angles. A mean value for the direction resulting from these different angles may be calculated and presented as the direction of the motion video camera 10.

In some applications, e.g. in applications where telephoto lenses are used, the precision in above mentioned determination of the distance between the motion video camera 10 and the position target 12 may be good enough. Using some lenses the precision in the above mentioned determination of the distance is not good enough, e.g. for wide-angle lenses. The reason for this is that the lenses may introduce distortions that make the practical focal length of the lens to vary over the image plane. In some cases the focal length may differ up to 40% between two points in the image plane. These problems are not acceptable in applications where the focal length of the lens varies very much and/or in applications where the precision is important. In one embodiment of invention the effect of these problems is decreased by calibrating the system in relation to the lens of the motion video camera 10. In the embodiment the visual identifier 24 of the position target 12 forms a calibration pattern that the camera reads and analyses. The analysis of the calibration pattern may be performed in the same motion video capturing session as the distance determining process, i.e. there is no need to return later when the calibration is performed in order capture further motion video of the visual identifier 24 in order to determine the distance $r_i$. One method for calibrating using a calibration pattern as discussed above is presented in OpenCV (Open Source Computer Vision Library), see <URL: http://opencv.org>. The functions for camera calibration in OpenCV may be used to identify many characteristics of a camera system and in particular it may generate a function $f(x_{ci}, y_{ci})$ of the focal length of the lens in relation to the position in the image plane $(x_{ci}, y_{ci})$. Details of using OpenCV for camera calibration are found in "Camera calibration With OpenCV", by Bernát Gábor, electronically published as a tutorial on the OpenCV website, <URL: http:// docs.opencv.org/trunk/doc/tutorials/calib3d/camera_calibration/camera_ calibration.html>. This focal length function $f(x_{ci}, y_{ci})$ may then be used in order to determine the focal length at a position of the visual identifier 24 within the captured image frame and accordingly the precision in the calculation of the distance may be increased, as the focal length is one of the variables used in order to calculate the distance $r_i$ used in the trilateration equations.

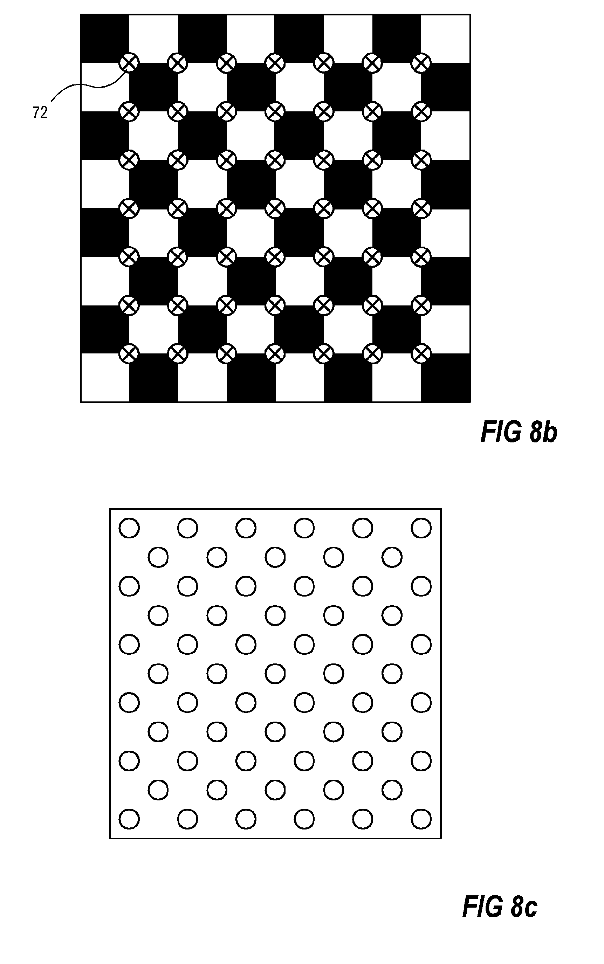

In order to facilitate the camera calibration using OpenCV the visual identifier may be formed in a plane or as a surface having a black and white chessboard pattern, having a symmetrical circle pattern, or having an asymmetrical circle pattern. The patterns may be defined by means of light emitting diodes instead of a printed pattern or as a complement to a printed pattern. In Figs 8a-c an example of a black and white chessboard pattern, a combined LED 72 and chessboard pattern, and an asymmetrical circle pattern are shown respectively.

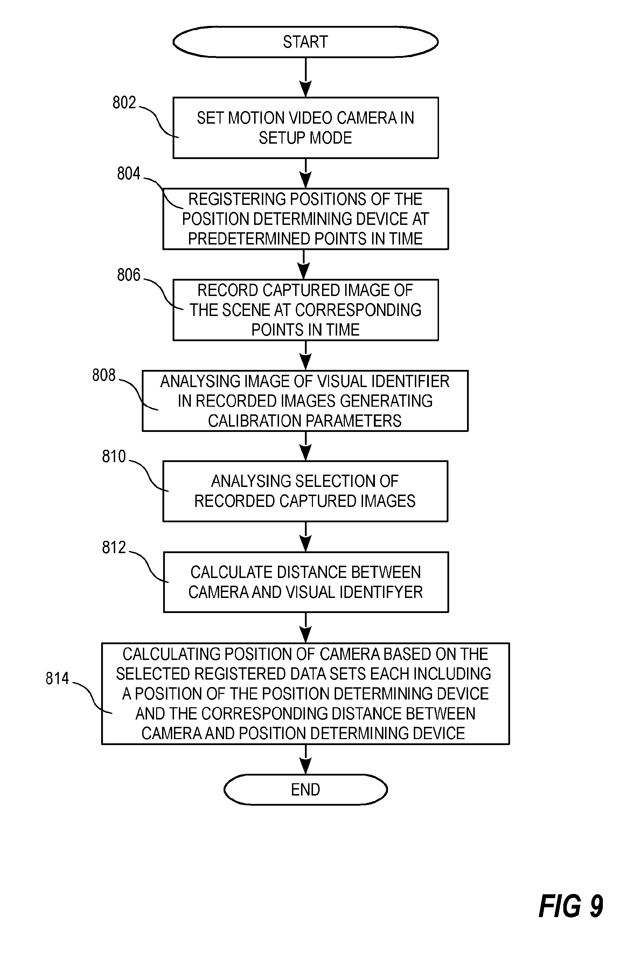

In Fig 9 a more detailed embodiment of the process for determining position related properties of the camera 10 is described. The process is described for a single camera. However, for a greater number of motion video cameras the steps are simply repeated for each camera.

Initially the camera is set in a setup mode, step 802. This act of setting the camera in setup mode may be performed manually on the camera 10, manually via a client 18 or a central server 14, or the camera 10 may be configured to recognise the visual identifier and automatically start the setup. Then, while the position target 12 is moved around in the scene captured by the camera 10, the positions of the position determining device 22 are registered at predetermined time intervals. These registered positions are then sent to a positioning calculating device 10, 14, 18, step 804. The positioning calculating device 10, 14, 18, may be a central server 14, a client 18, e.g. a mobile phone, a tablet, a computer, etc., the camera 10 itself, or another motion video camera. The captured image frame corresponding to each position registration is also registered and sent to the position calculating device 10, 14, 18, 806. One way of enabling capturing of corresponding positions and images is to have the devices synchronised. The position calculating device 10, 14, 18, then analyses registered images of the visual identifier, being a calibration pattern as described above, until reliable calibration parameters have been derived, step 808. When reliable calibration parameters have been derived, a selection of captured images are analysed by identifying a specified distance H, e.g. the height, the width, or the length of a specific marker, in the visual identifier 24, by identifying the position of the specified distance within the captured image, by applying previously calculated calibration parameters, relating to the varying focal length $f$, to the identified position of the specified distance, step 810. The data from the analysis is used to calculate the distance L between the camera 10 and the visual identifier 24, step 812.

Using the calculated distance L, $r_i$, to and the position of the position determining device for a plurality of registered positions of the position determining device the position calculating device is able to calculate the position of the motion video camera capturing the presently analysed scene, step 814, as described previously. Said registered positions are the positions that are related to the selected captured images.

In one embodiment the position calculating device indicates by means of a signal when the resulting position is within a predetermined error margin. In this embodiment additional pairs of positions and distances are registered until the calculating device signals. The signal may be relayed to an operator of the system as a sound signal or as a visual indicator on a display. Alternatively, a predetermined number of data sets, i.e. pairs of position and distance, are collected and used in the calculation.

In another embodiment the device that is processing the calibration calculations may be arranged to indicate when the calibration process has received enough data for reliable calibration. The indication may be a signal relayed to a person performing the calibration as a sound signal or as a visual indicator on a display.

**Claims**

1. Method for determining properties relating to the position of a camera at a site, said method comprising:

   moving a position target within a scene captured by the camera, said position target including a visual identifier and a position determining device,
   recording position data of the position determining device,
   identifying the visual identifier in image frames captured by the camera,
   relating image frames in which the visual identifier has been identified with corresponding recorded positions of the position determining device, and
   calculating a position of the camera based on related images and positions.

2. Method according to claim 1, further comprising calculating a viewing direction of the camera based on related images and positions.

3. Method according to any one of claims 1-2, wherein the act of relating image frames in which the visual identifier has been detected with corresponding recorded positions of the position determining device is performed by comparing time stamps of the image frames and time stamps of the recorded positions and then determining that an image is related to a recorded position when the time stamps of the image frame and the recorded position corresponds.

4. Method according to any one of claims 1-3, wherein the visual identifier is a predetermined pattern.

5. Method according to claim 4, wherein the predetermined pattern is a pattern uniquely identifying the position target.

6. Method according to any one of claims 1-5, wherein the position determining device is arranged in a housing and the visual identifier is arranged on said housing.

7. Method according to any one of claims 1-6, wherein the moving of the position target is performed by a manually controlled carrier.

8. Position target **characterised by**
   a visual identifier being a predetermined pattern and
   a position determining device.

9. Position target according to claim 8, wherein the visual identifier is of such size that it may be visually identified at a distance from the camera of more than two meters.

10. Position target according to any one of claims 8-9, wherein the visual identifier is arranged to enable unique identification of the position determining device.

11. Position target according to any one of claims 8-10, wherein the visual identifier is formed for enabling calculation of optical distortion in an optical system of a camera.

12. Position target according to any one of claims 8-11, further comprising a wireless network interface.

*FIG 1*

POSITION
DETERMINING
DEVICE

MEMORY

NETWORK
INTERFACE

*FIG 2*

**FIG 3**

**FIG 4a**

**FIG 4b**

FIG 6a

FIG 6b

*FIG 7a*

*FIG 7b*

100 — SETTING UP POSITIONING
DATA OF A CAMERA

102 — START REGISTERING TRACK OF
POSITION DETERMINING DEVCE

104 — START REGISTERING IMAGES
FROM CAMERA IMAGE VIEW

106 — MOVE POSITION TARGET IN THE
MONITORED AREA/AREAS

108 — RELATE IMAGES INCLUDING THE VISUAL IDENTIFIER TO
POSITIONS IN THE TRACK OF THE POSITION DETERMINING
DEVICE HAVING CORRESPONDING TIME STAMPS

110 — CALCULATING POSITION OF CAMERA AND ITS VIEWING
DIRECTION FROM THE DISTANCE TO THE VISUAL IDENTIFIER
IN A CAPTURED IMAGE AND THE CORRESPONDING POSITION
REGISTERED BY THE POSITION SENSOR

END

*FIG 5*

*FIG 8a*

**FIG 8b**

**FIG 8c**

```
                    ( START )
                        |
                        v
  802 ──┐    ┌─────────────────────────────┐
        └────│  SET MOTION VIDEO CAMERA IN │
             │         SETUP MODE          │
             └─────────────────────────────┘
                        |
                        v
  804 ──┐    ┌─────────────────────────────┐
        └────│ REGISTERING POSITIONS OF THE│
             │ POSITION DETERMINING DEVICE │
             │ AT PREDETERMINED POINTS IN  │
             │            TIME             │
             └─────────────────────────────┘
                        |
                        v
  806 ──┐    ┌─────────────────────────────┐
        └────│   RECORD CAPTURED IMAGE OF  │
             │  THE SCENE AT CORRESPONDING │
             │        POINTS IN TIME       │
             └─────────────────────────────┘
                        |
                        v
  808 ──┐    ┌─────────────────────────────┐
        └────│ANALYSING IMAGE OF VISUAL    │
             │IDENTIFIER IN RECORDED IMAGES│
             │GENERATING CALIBRATION       │
             │PARAMETERS                   │
             └─────────────────────────────┘
                        |
                        v
  810 ──┐    ┌─────────────────────────────┐
        └────│     ANALYSING SELECTION OF  │
             │    RECORDED CAPTURED IMAGES │
             └─────────────────────────────┘
                        |
                        v
  812 ──┐    ┌─────────────────────────────┐
        └────│    CALCULATE DISTANCE       │
             │ BETWEEN CAMERA AND VISUAL   │
             │         IDENTIFYER          │
             └─────────────────────────────┘
                        |
                        v
        ┌─────────────────────────────────────────┐
        │CALCULATING POSITION OF CAMERA BASED ON   │
        │THE SELECTED REGISTERED DATA SETS EACH    │
  814 ──│INCLUDING A POSITION OF THE POSITION      │
        │DETERMINING DEVICE AND THE CORRESPONDING  │
        │DISTANCE BETWEEN CAMERA AND POSITION      │
        │DETERMINING DEVICE                        │
        └─────────────────────────────────────────┘
                        |
                        v
                    (  END  )
```

*FIG 9*

Europäisches
Patentamt
European
Patent Office
Office européen
des brevets

# EUROPEAN SEARCH REPORT

Application Number

EP 13 19 3165

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| E | WO 2014/013015 A1 (AGT GROUP R & D GMBH [DE]; ATS GROUP IP HOLDINGS LTD) 23 January 2014 (2014-01-23) * abstract * * figures 1-5 * * paragraphs [0004], [8.28] - [0045], [0059] * | 1-5,7-12 | INV. G06T7/00 |
| X | US 2011/122257 A1 (KIRK JAMES C [US]) 26 May 2011 (2011-05-26) * abstract * * figures 1,4 * * paragraphs [0020], [0034] - [0035], [0046] - [0051] * | 1-12 | |
| A | US 2010/208941 A1 (BROADDUS CHRISTOPHER P [US] ET AL) 19 August 2010 (2010-08-19) * paragraphs [0040] - [0041] * | 1-12 | |
| X | US 2008/240616 A1 (HAERING NIELS [US] ET AL) 2 October 2008 (2008-10-02) * abstract * * figures 1-3 * * paragraphs [0006], [0008], [0038] - [0042], [0056] - [0061] * | 1,8 | TECHNICAL FIELDS SEARCHED (IPC) G06T H04N G06K |

The present search report has been drawn up for all claims

| Place of search | Date of completion of the search | Examiner |
|---|---|---|
| Munich | 30 April 2014 | Scholz, Volker |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 13 19 3165

This annex lists the patent family members relating to the patent documents cited in the above-mentioned European search report.
The members are as contained in the European Patent Office EDP file on
The European Patent Office is in no way liable for these particulars which are merely given for the purpose of information.

30-04-2014

| Patent document cited in search report | | Publication date | Patent family member(s) | | Publication date |
|---|---|---|---|---|---|
| WO 2014013015 | A1 | 23-01-2014 | EP<br>WO | 2709058 A1<br>2014013015 A1 | 19-03-2014<br>23-01-2014 |
| US 2011122257 | A1 | 26-05-2011 | NONE | | |
| US 2010208941 | A1 | 19-08-2010 | NONE | | |
| US 2008240616 | A1 | 02-10-2008 | TW<br>US<br>WO | 200903379 A<br>2008240616 A1<br>2008123907 A1 | 16-01-2009<br>02-10-2008<br>16-10-2008 |

EPO FORM P0459

For more details about this annex : see Official Journal of the European Patent Office, No. 12/82

**REFERENCES CITED IN THE DESCRIPTION**

**Non-patent literature cited in the description**

- **DIMITRIS E. MANOLAKIS.** Efficient Solution and Performance Analysis of 3-D Position Estimation by Trilateration. *IEEE trans. on Aerospace & Electronic Systems,* October 1996, vol. 32 (4), 1239-1248